# EUROPEAN PATENT APPLICATION

(11) **EP 3 808 617 A1**
(43) Date of publication of application: **21.04.2021**
(21) Application number: 19818801.3
(22) Date of filing: 30.05.2019
(51) Int. Cl.: B60S 13/02

(54) **FOLDABLE BEARING VEHICLE**

(30) Priority: 14.06.2018 CN 201820926205 U; 23.05.2019 CN 201910433289
(71) Applicant: NINGBO WISWNESS INTELLIGENT TECHONLOGY CO., LTD., Ningbo, Zhejiang 315040 (CN)
(72) Inventor: HONG, Sihan, Ningbo, Zhejiang 315040 (CN)
(74) Representative: Cabinet Chaillot
(86) International application number: PCT/CN2019/089300
(87) International publication number: WO 2019/237939

(57) **Abstract**

Disclosed is a foldable carrying vehicle, comprising a bracket and a rolling wheel assembly. The rolling wheel assembly is provided at the side of the bracket and comprises a front rolling wheel and a rear rolling wheel; the front end of the bracket is provided with a front supporting plate, and the rear end of the bracket is provided with a rear supporting plate; the bracket is provided with a rotating assembly and a locking assembly; when the bearing vehicle is folded, the bracket is flipped upwards or downwards to be folded; when the bearing vehicle is used, the bracket is reversely rotated to be unfolded and reset, and the locking assembly locks the unfolded bracket.

## Description

### Technical Field

The present invention relates to an auxiliary device for car rescue, in particular, a foldable carrying vehicle.

### Background Art

When the car is moving, it is likely to have a flat tire due to the reasons of the road surface or the car itself. In case of tire burst, the tire will loss pressure instantaneously, thereby, the tire wall will shrink inward. If you continue to drive, it will cause the car to lose its balance. More seriously, the car will swerve to the side of the flat tire, which is very likely to cause a traffic accident. After the occurrence of tire burst, we usually replace the flat tire with the spare tire and then drive the car to the repair station to have the flat tire repaired or replaced. However, the disadvantages are in that: 1. The spare tire is heavy in self weight, and the replacement of spare tire is laborious and involves complex steps. 2. The spare tire occupies a large space in the car, so that there is smaller space for storage in the trunk, thus affecting the driving experience.

Therefore, there has been a carrying vehicle developed through the prior art, which comprises a frame; the wheel assembly is arranged on sides of the frame, which includes front wheels and a rear wheel; a front support plate and a rear support plate are respectively located at the front end and rear end of the frame, and are respectively coupled to the front axle and rear axle. In the case of a flat tire, the flat tire is moved from the front support plate onto the frame and is fixed between the front and rear support plates. The front support plate can be horizontal or tilt upward, and under the front support plate there is a jaw. When it is horizontal, the jaw touches the ground to not only grasp the ground, but also support the entire front support plate so as to separate the front support plate from the ground, so that when the tire is moving onto the carrying vehicle, the carrying vehicle can grasp the ground firmly, to prevent the auxiliary device from slipping.

The disadvantage of the prior art is that the carrying vehicle is large in size and occupies a large space in the car.

### Contents of the invention

The technical problem to be solved by the present invention is to provide a foldable carrying vehicle with simple structure and easy operation, which is used for self-rescue after the occurrence of tire burst and can be folded after use to greatly reduce the usage of space in the car.

To solve the above technical problem, the present invention provides a foldable carrying vehicle, comprising a frame and a wheel assembly; the wheel assembly is arranged on sides of the frame and includes front wheels and a rear wheel; a front support plate and a rear support plate are respectively located at the front end and rear end of the frame, characterized in that the said frame is provided with a turning assembly and a locking assembly. When the vehicle is folded, the frame can be turned downwards or upwards through the turning assembly to fold; before use, the frame can be turned reversely to unfold, and the locking assembly will lock the unfolded frame.

In a further preferred embodiment of the present invention, the said frame comprises a first beam and a second beam which are parallel to each other; the said turning assembly includes a first turning mechanism and a second turning mechanism; the said locking assembly includes a first locking mechanism and a second locking mechanism; the first turning mechanism and the first locking mechanism are on the first beam, and the second turning mechanism and the second locking mechanism are on the second beam.

In a further preferred embodiment of the present invention, the said first beam includes a first turning beam and a second turning beam; the said second beam includes a third turning beam and a fourth turning beam; the first turning mechanism and the first locking mechanism are arranged between the first turning beam and the second turning beam, and the second turning mechanism and the second locking mechanism between the third turning beam and the fourth turning beam.

In a further preferred embodiment of the present invention, there are U-shaped parts on both the first beam and the second beam; the said U-shaped part comprises two clamp plates and connecting piece between the two clamp plates; there is one or two shaft joints between the two clamp plates, which, together with the clamp plates, form the said first or second turning mechanism; the connecting piece is the said first or second locking mechanism, and the shaft joints are screws.

In a further preferred embodiment of the present invention, there is a on the foremost end of the lower surface of the said front support plate.

In a further preferred embodiment of the present invention, an assistant turning part is provided on the upper surface of the said front support plate. When a flat tire is moved onto the frame, it extrudes the assistant turning part to force the front support plate to turn inwards, so as to make the jaw separate from the ground.

In a further preferred embodiment of the present invention, a supporting rod is available below the rear support plate; the end of the supporting rod is connected to the rear wheel; in use, the rear support plate leans against the supporting rod.

In a further preferred embodiment of the present invention, both the front and rear support plates are coupled with the frame; when the vehicle is folded, the front and rear support plates turn inwards while getting close to the frame; when the vehicle is unfolded, the front and rear support plates are turned outwards, the end of the front support plate touches the ground and the rear support plate leans against the supporting rod.

In a further preferred embodiment of the present invention, the said rear wheel is a universal wheel. The said frame is provided with a belt for fixing the flat tire.

In a further preferred embodiment of the present invention, there is a rear axle on the rear end of the frame, which is coupled with the supporting rod; in use, the supporting rod is turned to the underneath of the rear support plate; when the vehicle is folded, the supporting rod can be turned with the rear support plate to above the frame.

Compared with the prior art, the present invention aims to fold and lock the frame by adopting a turning assembly and a locking assembly on the frame. When the vehicle is folded, the frame is turned downwards or upwards by means of the turning assembly to fold before it is put in the car; before use, the frame can be turned reversely to unfold, and the locking assembly will lock the unfolded frame. In the case of a flat tire, the flat tire can be moved onto the frame along the front support plate and is finally fixed between the front and rear support plates. The advantage of the present invention is that the size of the vehicle is greatly reduced, thereby reducing the space it occupies in the car; the vehicle is also very easy to fold or unfold.

A foldable carrying vehicle comprising a frame, a front support plate, a rear support plate and wheels; the front and rear support plates are respectively arranged at both ends of the frame; the frame contains two parallel beams; a first turning mechanism is provided on the said beam; the said first turning mechanism includes a first turning rod and a second turning rod which are coupled to each other; a rotation fixing mechanism is arranged between the first turning rod and the second turning rod; when the first turning mechanism is unfolded, the first turning rod and the second turning rod turn to a horizontal position and then are fixed by the rotation fixing mechanism to stop turning; when the first turning mechanism is folded, the first turning rod and the second turning rod are folded at a certain angle.

In a further preferred embodiment of the present invention, the said rotation fixing mechanism contains a first abutting surface set at the end of the first turning rod and a second abutting surface set at the end of the second turning rod; when the vehicle is folded, the first abutting surface and second abutting surface are closed together and fixed.

In a further preferred embodiment of the present invention, the said rotation fixing mechanism comprises a baffle arranged above the second turning rod; when the first turning mechanism is unfolded, the first turning rod and the second turning rod turn to a horizontal position and are fixed by the baffle to stop turning; when the first turning mechanism is folded, the first turning rod and the second turning rod are folded at a certain angle.

In a further preferred embodiment of the present invention, there is an inverted U-shaped fixing plate around the second turning rod, which comprises an inner panel, an outer panel and the said baffle; there is a cavity formed inside the inverted U-shaped fixing plate to accommodate the first turning rod; when the vehicle is folded, the first turning rod stretches into the said cavity and is fixed; when the vehicle is unfolded, the first turning rod leaves the said cavity.

In a further preferred embodiment of the present invention, the said rotation fixing mechanism also comprises a bolt assembly; the bolt of the bolt assembly penetrates and fixes the inverted U-shaped fixing plate and the first turning rod.

In a further preferred embodiment of the present invention, the said bolt assembly comprises a bolt, a reset spring and a pull ring; there are well-matched sockets in the inverted U-shaped fixing plate and the first turning rod,; the said bolt is inserted in the inverted U-shaped fixing plate; the reset spring is set on the bolt inserted; the pull ring is arranged on the outer end of the bolt; when the pull ring is pulled outwards, the bolt draws back to form a space for the first turning rod to enter; after the first turning rod enters the space, releasing the pull ring will allow the bolt to penetrate and fix the first turning rod through the socket.

In a further preferred embodiment of the present invention, the said socket is set in the inner panel and outer panel of the inverted U-shaped fixing plate; and the bolt is inserted in the socket horizontally.

In a further preferred embodiment of the present invention, the said first turning rod includes an inner wall arranged with a socket and an outer wall arranged with a slot; when the first turning mechanism is unfolded, the bolt is pulled out of the sockets in the inner panel and inner wall, which will unlock the rotation fixing mechanism; the first turning rod and the second turning rod are turned until the bolt moves into the slot; the bolt is released and inserted again in the sockets in the inner panel and inner wall, which will lock the rotation fixing mechanism; when the first turning mechanism is folded, the bolt is pulled out of the sockets in the inner panel and inner wall, which will unlock the rotation fixing mechanism; the bolt moves out of the slot, and the first turning rod and the second turning rod are turned to fold at a certain angle.

In a further preferred embodiment of the present invention, the said rotation fixing mechanism also comprises a screw assembly; on the inverted U-shaped fixing plate and the first turning rod, there are well-matched screw holes; when the vehicle is folded, the first turning rod stretches into the said cavity, and the screws pass through the screw holes to fix the first turning rod and inverted U-shaped fixing plate.

In a further preferred embodiment of the present invention, the said screw holes are arranged in the baffle, and the screws are inserted vertically in the screw holes by rotation.

In a further preferred embodiment of the present invention, the said frame comprises a front axle and a rear axle; a third turning mechanism is provided between the said front support plate and front axle; when the vehicle is folded, the first turning rod is turned downward by means of the first turning mechanism to fold for the first time, and the front support plate is turned upward to fold for the second time.

In a further preferred embodiment of the present invention, the said third turning mechanism comprises a swivel block on the front support plate that is coupled with the front axle via the swivel block.

In a further preferred embodiment of the present invention, a first coupling subpart extending downward is located at the end of the first turning rod and a second coupling subpart at the lower end of the inverted U-shaped fixing plate, and the two subparts together form the coupling part.

In the present invention, a first turning mechanism is provided on the frame; the said first turning mechanism includes a first turning rod and a second turning rod which are coupled to each other; when the vehicle is unfolded, the first turning rod and the second turning rod are turned to a horizontal position and then are fixed by the rotation fixing mechanism; when the vehicle is folded, the first turning rod and the second turning rod are closed. In this way, the size of the vehicle is decreased, thus greatly reducing the space occupied in the car.

### Description of figures

Fig.1 is a stereogram (1) showing unfolded structure of the present invention;
Fig.2 is an enlarged view of position A as shown in Fig.1;
Fig.3 is a stereogram (2) showing unfolded structure of the present invention;
Fig.4 is a stereogram showing folded structure of the present invention;
Fig.5 is a schematic diagram showing that the supporting rod is being turned when the vehicle is folded;
Fig.6 is a diagram of the vehicle in use (1);
Fig.7 is a diagram of the vehicle in use (2);
Fig.8 is a structural diagram of the U-shaped part;
Fig.9 is a stereogram (3) showing unfolded structure of the present invention;
Fig.10 is an enlarged view of position B as shown in Fig.9;
Fig.11 is a stereogram (1) showing structure of the present invention being unfolded;
Fig.12 is a stereogram (1) showing structure of the present invention being folded;
Fig.13 is a sectional view (1) of the present invention;
Fig.14 is an enlarged view of position C as shown in Fig. 3;
Fig.15 is an enlarged view of position D as shown in Fig. 3;
Fig.16 is a stereogram (2) showing structure of the present invention being unfolded;
Fig.17 is a sectional view (2) of the present invention;
Fig.18 is an enlarged view of position E as shown in Fig.7;
Fig.19 is a stereogram (2) showing structure of the present invention being folded;
Fig.20 is a stereogram showing structure of the present invention being folded after the inverted U-shaped fixing plate is removed;

### Embodiments

As below, the present invention is further described by combining with the drawings of the embodiments.

### Embodiment 1:

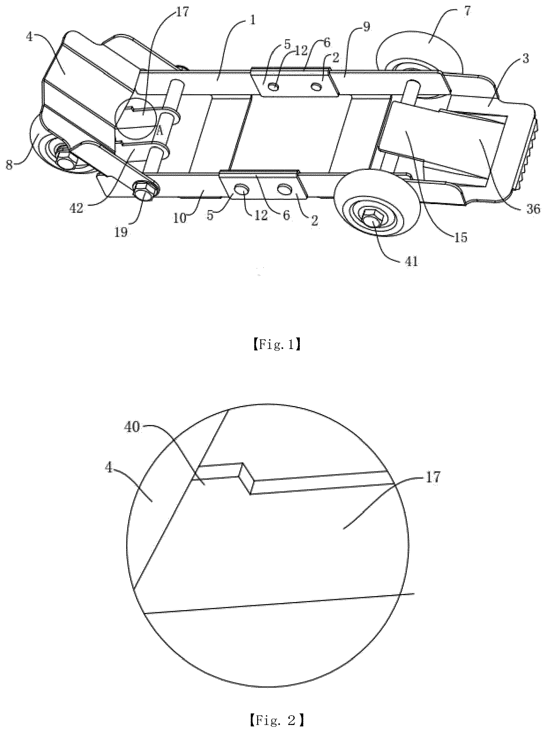

As shown in Fig.1-Fig.3, a foldable carrying vehicle comprising a frame 1 and a wheel assembly; the wheel assembly is arranged on sides of the frame 1 and includes front wheels 7 and a rear wheel 8; a front support plate 3 and a rear support plate 4 are respectively located at the front end and rear end of the frame 1; the said frame 1 is provided with a turning assembly 5 and a locking assembly 6; when the vehicle is folded, the frame 1 can be turned downwards or upwards by means of the turning assembly 5 to fold; before use, the frame 1 can be turned reversely to unfold, and the locking assembly 6 will lock the unfolded frame 1. There can be two front wheels 7 and one rear wheel 8. After folded, the device is greatly decreased in size, thus greatly reducing the use of space in the car.

As shown in Fig.1, the frame 1 comprises a first beam 9 and a second beam 10 which are parallel; the turning assembly 5 includes a first turning mechanism 51 and a second turning mechanism 52; the locking assembly 6 includes a first locking mechanism 61 and a second locking mechanism 62; there are the first turning mechanism 51 and the first locking mechanism 61 on the first beam 9, and the second turning mechanism 52 and the second locking mechanism 62 on the second beam 10; the first beam 9 includes a first turning beam 91 and a second turning beam 92; the second beam 10 includes a third turning beam 93 and a fourth turning beam 94; the first turning mechanism 51 and the first locking mechanism 61 are arranged between the first turning beam 91 and the second turning beam 92, and the second turning mechanism 52 and the second locking mechanism 62 between the third turning beam 93 and the fourth turning beam 94.

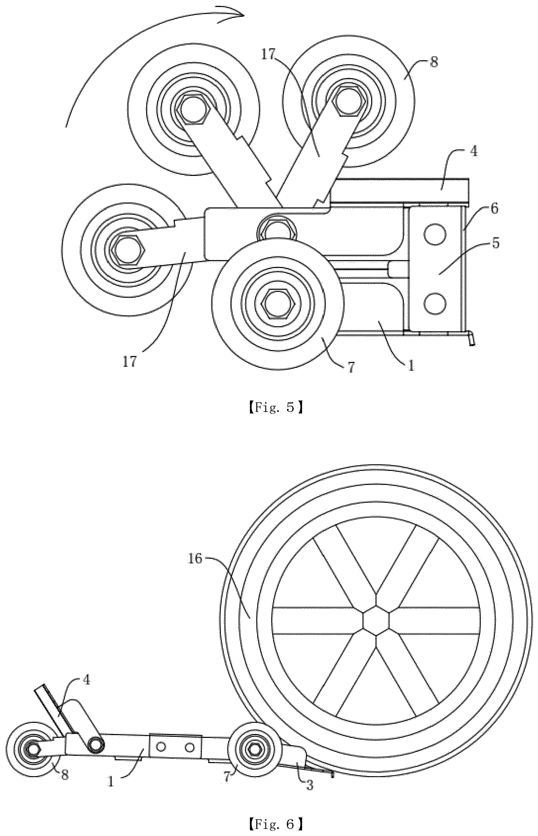

As shown in Fig.1-Fig.3, in this embodiment, the device can be turned downwards. There are U-shaped parts on both the first beam 91 and the second beam 92; the said U-shaped part comprises two clamp plates 2 and a connecting piece 11 between the two clamp plates 2; there is one or two shaft joints 12 between the two clamp plates 11, which, together with the clamp plates 2, form the said first turning mechanism 51 or second turning mechanism 52; the connecting piece 11 is the said first locking mechanism 61 or second locking mechanism 62, and the shaft joints 12 are just screws. When the frame 1 is turned to a horizontal position, connecting piece 11 can make the frame 1 turn continuously and can also withstand the pressure from the flat tire 16. There is a jaw 14 on the foremost end of the lower surface of the front support plate 3. An assistant turning part 15 is provided on the upper surface of the said front support plate 3. When the flat tire 16 moves onto the frame, it extrudes the assistant turning part 15 to force the front support plate 3 to turn inwards, so as to make the jaw 13 separate from the ground. A supporting rod 17 is available beneath the rear support plate 4; the end of the supporting rod 17 is connected to the rear wheel 8; in use, the rear support plate 4 leans against the supporting rod 17. Both the front support plate 3 and rear support plate 4 are coupled with the frame 1; when the vehicle is folded, the front support plate 3 and rear support plate 4 are turned inwards while getting close to the frame 1; before use, the front support plate 3 and rear support plate 4 are turned outwards, the end of the front support plate 3 touches the ground and the rear support plate 4 leans against the supporting rod 17. As shown in Fig.6, the rear wheel 8 is a universal wheel. The said frame 1 is provided with a belt 18 for fixing the flat tire 16.

### Embodiment 2:

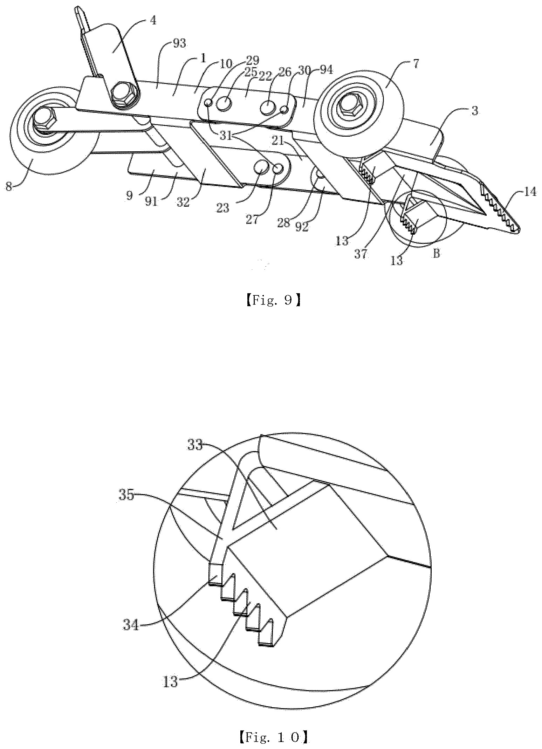

As shown in Fig. 9, a bidirectionally foldable carrying vehicle comprising a frame 1 and a wheel assembly; the wheel assembly is arranged on sides of the frame 1 and includes front wheels 7 and a rear wheel 8; a front support plate 3 and a rear support plate 4 are respectively located at the front end and rear end of the frame 1; the frame 1 comprises a first beam 9 and a second beam 10 which can be turned upwards or downwards to be folded; the first beam 9 and second beam 10 are folded by turning and fixed by the bolt assembly after being unfolded horizontally; the first beam 9 includes a first turning beam 91 and a second turning beam 92; the second beam 10 includes a third turning beam 93 and a fourth turning beam 94; the first turning beam 91 and second turning beam 92 are coupled with the first fixing plate 21 and can be turned upwards or downwards, and the third turning beam 93 and fourth turning beam 94 are coupled with the second fixing plate 22 and can be turned upwards or downwards.

As shown in Fig.9, the first fixing plate 21 is arranged between the first turning beam 91 and second turning beam 92, and the second fixing plate 22 between the third turning beam 93 and fourth turning beam 94. A first shaft joint 23 and a second shaft joint 24 are respectively located at both ends of the first fixing plate 21, and a third shaft joint 25 and a fourth shaft joint 26 are respectively located at both ends of the second fixing plate 22; the first turning beam 91, the second turning beam 92, the third turning beam 93 and fourth turning beam 94 are connected respectively by the first shaft joint 23, the second shaft joint 24 (not shown in the figures), the third shaft joint 25 and fourth shaft joint 26. There is well-matched first socket assembly 27 between the first fixing plate 21 and the first turning beam 91, second socket assembly 28 between the second turning beam 92 and the first fixing plate 21, third socket assembly 29 between the third turning beam 93 and the second fixing plate 22, and fourth socket assembly 30 between the fourth turning beam 94 and the second fixing plate 22. The socket assembly contains four bolts 31 which are inserted respectively in the first socket assembly 27, the second socket assembly 28, the third socket assembly 29 and fourth socket assembly 30. When the first turning beam 91 and second turning beam 92 are unfolded, they are spaced apart, and when folded, they are crossed. When the third turning beam 93 and fourth turning beam 94 are unfolded, they are spaced apart, and when folded, they are crossed. The first fixing plate 21 and the second fixing plate 22 are long and narrow. There is a support plate 32 at the bottom of the frame 1.

### Embodiment 3:

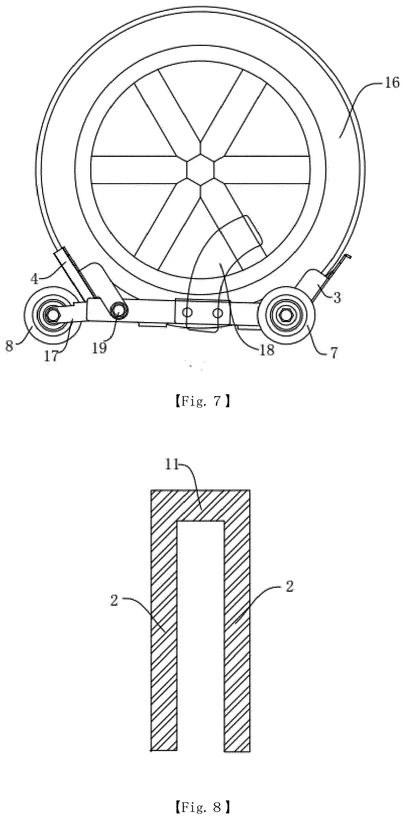

As shown in Fig.1-Fig. 10, a non-slip carrying vehicle comprising a frame 1 and a wheel assembly; the wheel assembly is arranged on sides of the frame 1 and includes front wheels 7 and a rear wheel 8; a front support plate 3 and a rear support plate 4 are respectively located at the front end and rear end of the frame 1; there is at least one jaw 13 on the lower surface of the front support plate 3, which contains a base 33 with a section of hollow triangle and jaw end 34; the base 33 is below the front support plate 3; when the front end of the front support plate 3 touches the ground, the jaw end 34 supports the front support plate 3 to force the front wheels 7 to separate from the ground; while the front support plate 3 is turned inwards, the jaw 13 is turned and uptilted, so that the front wheels 7 touches the ground.

As shown in Fig.10, the jaw end 34 is on the extended side 35 of the triangle.

An assistant turning part 15 is provided on the upper surface of the front support plate 3. When the flat tire moves onto the frame 1, it extrudes the assistant turning part 15 to force the front support plate 3 to turn inwards, so as to make the jaw 13 separate from the ground. An uptilted pressing plate 36 is arranged on the front support plate 3; there is sunken area 37 formed between the lower surface of the front support plate 3 and pressing plate 36, and the jaw 13 is just at two sides of the sunken area 37. The assistant turning part 15 is just the pressing plate 36. There are two front wheels 7 between which the jaw 13 is located. When the front end of the front support plate 3 touches the ground, the extended side 35 is vertical to the ground.

### Embodiment 4:

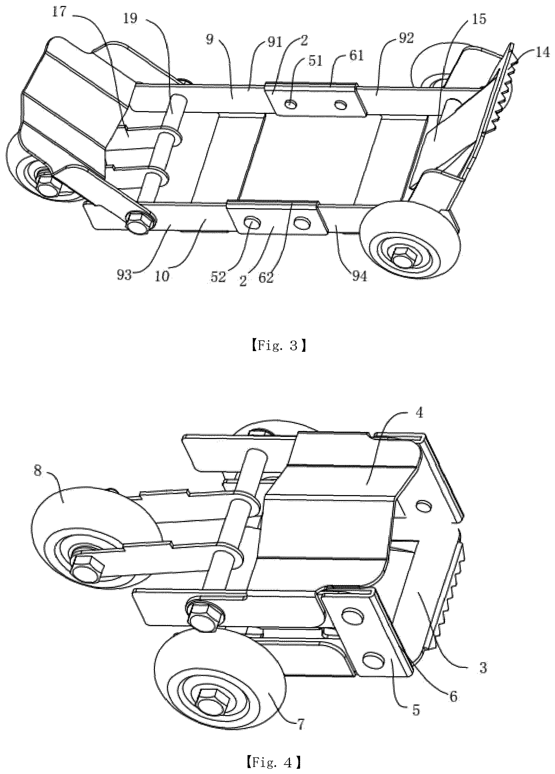

As shown in Fig.4 and Fig.5, a well foldable carrying vehicle comprising a frame 1 and a wheel assembly; the wheel assembly is arranged on sides of the frame 1 and includes front wheels 7 and a rear wheel 8; a front support plate 3 and a rear support plate 4 are respectively located at the front end and rear end of the frame 1; at the rear end of the frame 1, there is a rear axle 19 that is coupled with the supporting rod 17; the end of the supporting rod 17 is connected with the rear wheel 8; in use, the rear support plate 4 leans against the supporting rod 17; it can be folded by turning the supporting rod 17 towards the inner side of the frame 1.

As shown in Fig.1 and Fig.2, there is a fixed lug boss 40 on the supporting rod 17; the rear support plate 4 leans against the fixed lug boss 40 that is on the upper end face of the supporting rod 17; a front axle 41 is on the front end of the frame 1; the front support plate 3 is coupled with the front axle 41 and the rear support plate 4 is coupled with the rear axle 19; when the vehicle is folded, both the front support plate 3 and the rear support plate 4 are folded towards the inner side of the frame 1, while the supporting rod 17 is turned to above the rear support plate 4. The supporting rod 17 comprises two parallel connecting rods 42 which are in a strip shape. There is a jaw 13 on the foremost end of the lower surface of the front support plate 3. The rear wheel 8 is a universal wheel. The said frame 1 is provided with a belt 18 for fixing the flat tire.

### Embodiment 5:

As below, the present invention is further described by combining with the drawings of the embodiments.

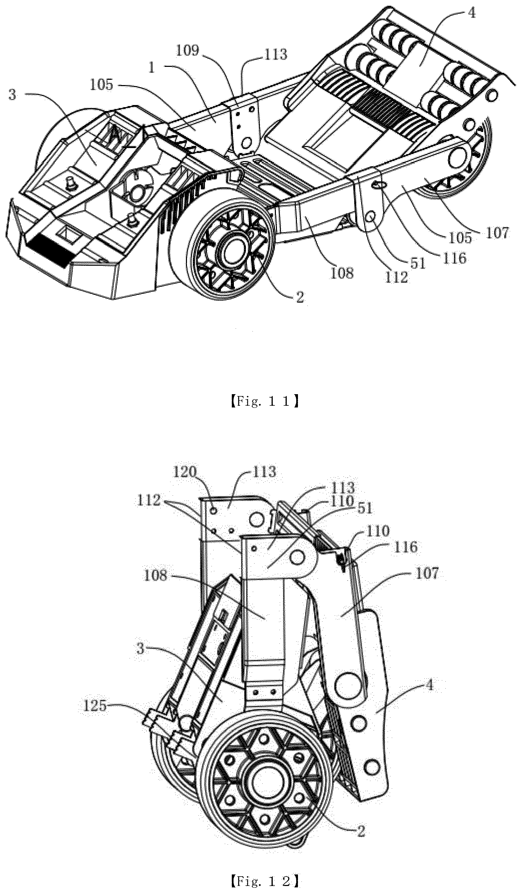

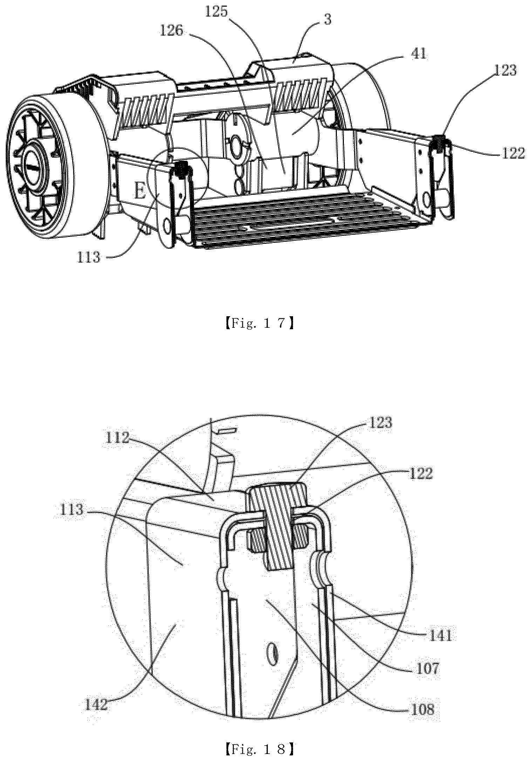

As shown in Fig.11-Fig.20, a foldable carrying vehicle comprising a frame 1, a front support plate 3, a rear support plate 4 and wheels 2; the wheel 2 is placed around the frame 1; the front support plate 3 and rear support plate 4 which could be in other shapes are arranged at both ends of frame 1; the flat tire goes into the rear support plate 4 from the front support plate 3 and then is fixed above frame 1. Frame 1 contains two parallel beams 105. A first turning mechanism 51 is provided on the beam 105, which can be folded after turning so as to make the entire carrying vehicle folded. The first turning mechanism 51 includes a first turning rod 107 and a second turning rod 108 which are coupled to each other; a rotation fixing mechanism 109 is arranged between the first turning rod 107 and the second turning rod 108; when the first turning mechanism 51 is unfolded, the first turning rod 107 and the second turning rod 108 are turned to a horizontal position and then are fixed by rotation fixing mechanism 109 to stop turning; when the first turning mechanism 51 is folded, the first turning rod 107 and the second turning rod 108 are folded at a certain angle, thus greatly reducing the size of the carrying vehicle.

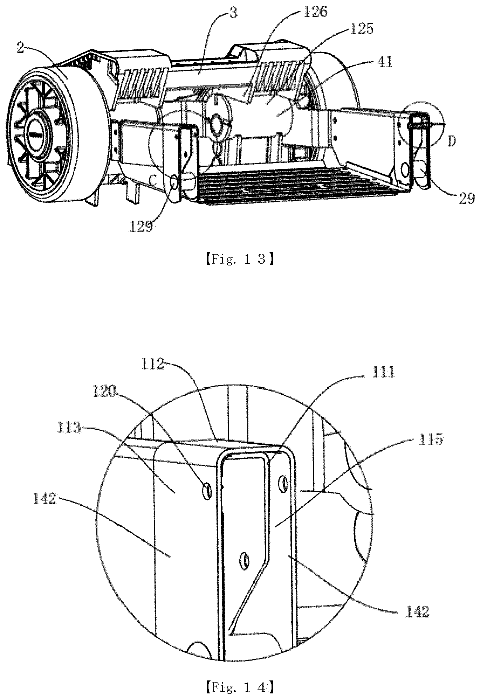

As shown in Fig.14, Fig.19 and Fig.20, the rotation fixing mechanism 109 contains a first abutting surface 110 set at the end of the first turning rod 107 and a second abutting surface 111 set at the end of the second turning rod 108; when the vehicle is folded, the first abutting surface 110 and second abutting surface 111 are closed together and fixed, and extrude each other to fix the first turning rod 107 and the second turning rod 108. The rotation fixing mechanism 109 comprises a baffle 112 arranged above the second turning rod 108; when the first turning mechanism 51 is unfolded, the first turning rod 107 and the second turning rod 108 are turned to a horizontal position and are fixed by the baffle 112 to stop turning; when the first turning mechanism 51 is folded, the first turning rod 107 and the second turning rod 108 are folded at a certain angle. The baffle 112 provides assistance for fixation, which, with cooperation of the first abutting surface 110 and the second abutting surface 111, further prevents the first turning rod 107 and the second turning rod 108 from turning. There is an inverted U-shaped fixing plate 113 around the second turning rod 108, which comprises an inner panel 141, an outer panel 142 and the said baffle 112; there is a cavity 115 formed inside the inverted U-shaped fixing plate 113 to accommodate the first turning rod 107; when the vehicle is folded, the first turning rod 107 stretches into the cavity 115 and is fixed; when the vehicle is unfolded, the first turning rod 107 leaves the cavity 115. With a guiding function, the two panels guarantee that the first abutting surface 110 aligns with the second abutting surface 111.

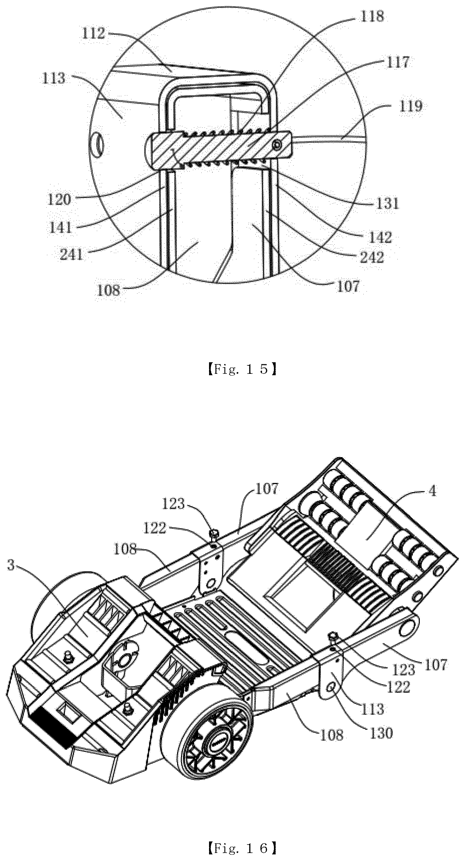

As shown in Fig.15, the rotation fixing mechanism 109 also comprises bolt assembly 116; the bolt 117 penetrates and fixes the inverted U-shaped fixing plate 113 and the first turning rod 107. The bolt assembly 116 is used for further fixing the first turning rod 107 and the second turning rod 108 to prevent the carrying vehicle being folded out of control due to jitter when the vehicle is moving. The bolt assembly 116 comprises a bolt 117, a reset spring 118 and a pull ring 119; on both the inverted U-shaped fixing plate 113 and the first turning rod 107, there are well-matched sockets 120; the bolt 117 is inserted in the inverted U-shaped fixing plate 113; the reset spring 118 is set on the bolt 117 inserted; the pull ring 119 is arranged at the outer end of the bolt 117; when the pull ring 119 is pulled outward, the bolt 117 draws back to form a space for the first turning rod 107 to enter; after the first turning rod 107 enters the space, releasing the pull ring 119 will allow the bolt 117 to penetrate and fix the first turning rod 107 through the socket 120. The bolt assembly 116 can be unlocked or locked by only pulling the pull ring 119; thereby, it's very easy to operate. The socket 120 is set on the inner panel 141 and the outer panel 142 of the inverted U-shaped fixing plate 113; the bolt 117 is inserted in the socket 120 transversely, and also inserted in the inner panel 141 and the outer panel 142 transversely; the flat tire is located on the frame 1, without affecting the bolt 117 here.

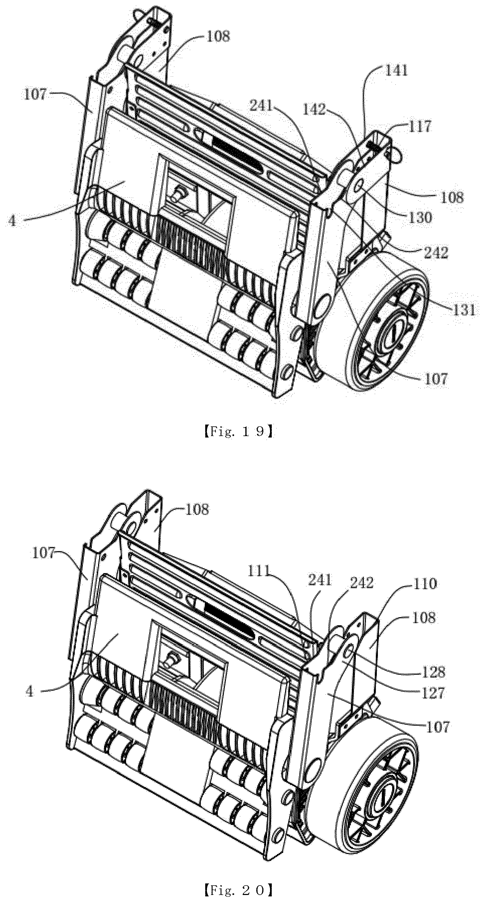

As shown in Fig.19 and Fig.20, the first turning rod 107 includes an inner wall 241 arranged with a socket 120 and an the outer wall 242 arranged with a slot 131; when the first turning mechanism 51 is unfolded, the bolt 117 is pulled out of the sockets 120 in the inner panel 141 and inner wall 241, which will unlock the rotation fixing mechanism 109; the first turning rod 107 and the second turning rod 108 are turned until the bolt 117 moves into the slot 131; the bolt is released and inserted again in the sockets in the inner panel 141 and the inner wall 241, which will lock the rotation fixing mechanism 109; when the first turning mechanism 51 is folded, the bolt 117 is pulled out of the sockets 120 in the inner panel 141 and the inner wall 241, which will unlock the rotation fixing mechanism 109; the bolt 117 moves out of the slot 131, and the first turning rod 107 and the second turning rod 108 are turned to fold at a certain angle. The advantage is that there is no need for the bolt to move out of all the sockets 120, but only part of sockets 120 (i.e. the sockets in the inner panel 141 and inner wall 241), in order to unlock the rotation fixing mechanism 109; accordingly, the rotation fixing mechanism 109 can be locked by just inserting the bolt in the sockets in the inner panel 141 and inner wall 241. Therefore, it's very easy to operate.

As shown in Fig.16 - Fig.18, the rotation fixing mechanism also comprises screw assembly 121; there are well-matched screw holes 122 on both the inverted U-shaped fixing plate 113 and the first turning rod 107; when the vehicle is folded, the first turning rod 107 stretches into the cavity 115, and the screws 123 pass through the screw holes 122 to fix the inverted U-shaped fixing plate 113 and the first turning rod 107. The screw holes 122 are arranged in the baffle 112; the screws 123 are inserted vertically in the screw holes by turning. The bolt assembly 116 is used for further fixing the first turning rod 107 and the second turning rod 108 to prevent the carrying vehicle being folded out of control due to shaking when the vehicle is moving. As the screws 123 are very small and fixed firmly, they will not be influenced by the flat tire.

As shown in Fig.12, Fig.19 and Fig.20, the frame 1 comprises a front axle 41 and a rear axle; a third turning mechanism 125 is provided between the front support plate 2 and front axle 41; when the vehicle is folded, the first turning rod 107 is turned downward by means of the first turning mechanism 51 to fold for the first time, and the front support plate 2 is turned upward to fold for the second time. The third turning mechanism 125 comprises a swivel block 126 on the front support plate 2 that is coupled with the front axle 41 via the swivel block 126. At the end of the first turning rod 107, there is an extension part 127 extending obliquely downward; a first coupling subpart 128 and a second coupling subpart 129 are respectively located at the lower ends of the extension part 127 and the inverted U-shaped fixing plate, and the two subparts together form the coupling part 130. The first turning rod 107 and the second turning rod 108 can be folded by turning around the coupling part 130.

As above, the foldable carrying vehicle provided by the present invention is described in detail. The principle and embodiments of the present invention are elaborated by specific examples. The above embodiments are only used to help understand the present invention and core concept thereof. It should be noted that, the ordinary technical personnel in this technical field can, without deviating from the principle of the present invention, make modifications and improvements as for the present invention. Such modifications and improvements are also under the protection of claims of the present invention.

## Claims

1. A foldable carrying vehicle comprising a frame and a wheel assembly; the wheel assembly is arranged on the sides of the frame and includes front wheels and a rear wheel; a front support plate and a rear support plate are respectively located at the front end and rear end of the frame, **characterized in that** the said frame is provided with a turning assembly and a locking assembly; when the vehicle is folded, the frame can be turned downwards or upwards through the turning assembly to fold; before use, the frame can be turned reversely to unfold, and the locking assembly will lock the unfolded frame.

2. The foldable carrying vehicle according to claim 1, wherein the said frame comprises a first beam and a second beam which are parallel to each other; the said turning assembly includes a first turning mechanism and a second turning mechanism; the said locking assembly includes a first locking mechanism and a second locking mechanism; the first turning mechanism and the first locking mechanism are on the first beam, and the second turning mechanism and the second locking mechanism are on the second beam.

3. The foldable carrying vehicle according to claim 2, wherein the said first beam comprises a first turning beam and a second turning beam; the second beam comprises a third turning beam and a fourth turning beam; the first turning mechanism and the first locking mechanism are arranged between the first turning beam and the second turning beam, and the second turning mechanism and the second locking mechanism between the third turning beam and the fourth turning beam.

4. The foldable carrying vehicle according to claim 2, wherein there are U-shaped parts on both the first beam and the second beam; the said U-shaped part comprises two clamp plates and a connecting piece between the two clamp plates; there is one or two shaft joints between the two clamp plates, which, together with the clamp plates, form the said first or second turning mechanism; the connecting piece is the said first or second locking mechanism, and the shaft joints are screws.

5. The foldable carrying vehicle according to claim 1, wherein there is a jaw on the foremost end of the lower surface of the said front support plate.

6. The foldable carrying vehicle according to claim 5, wherein an assistant turning part is provided on the upper surface of the said front support plate; when a flat tire is moved onto the frame, it extrudes the assistant turning part to force the front support plate to turn inwards, so as to make the jaw separate from the ground.

7. The foldable carrying vehicle according to claim 1, wherein a supporting rod is available below the rear support plate; the end of the supporting rod is connected to the rear wheel; in use, the rear support plate leans against the supporting rod.

8. The foldable carrying vehicle according to claim 7, wherein both the front and rear support plates are coupled with the frame; when the vehicle is folded, the front and rear support plates turn inwards while getting close to the frame; when the vehicle is unfolded, the front and rear support plates are turned outwards, the end of the front support plate touches the ground and the rear support plate leans against the supporting rod.

9. The foldable carrying vehicle according to claim 1, wherein the said rear wheel is a universal wheel; the said frame is provided with a belt for fixing the flat tire.

10. A foldable carrying vehicle comprising a frame, a front support plate, a rear support plate and wheels; the front and rear support plates are respectively arranged at both ends of the frame; the frame contains two parallel beams, **characterized in that** a first turning mechanism is provided on the said beam; the said first turning mechanism includes a first turning rod and a second turning rod which are coupled to each other; a rotation fixing mechanism is arranged between the first turning rod and the second turning rod; when the first turning mechanism is unfolded, the first turning rod and the second turning rod turn to a horizontal position and then are fixed by the rotation fixing mechanism to stop turning; when the first turning mechanism is folded, the first turning rod and the second turning rod are folded at a certain angle.

11. The foldable carrying vehicle according to claim 10, wherein the said rotation fixing mechanism contains a first abutting surface set at the end of the first turning rod and a second abutting surface set at the end of the second turning rod; when the vehicle is folded, the first abutting surface and second abutting surface are closed together and fixed.

12. The foldable carrying vehicle according to claim 10, wherein the said rotation fixing mechanism comprises a baffle arranged above the second turning rod; when the first turning mechanism is unfolded, the first turning rod and the second turning rod turn to a horizontal position and are fixed by the baffle to stop turning; when the first turning mechanism is folded, the first turning rod and the second turning rod are folded at a certain angle.

13. The foldable carrying vehicle according to claim 12, wherein there is an inverted U-shaped fixing plate around the second turning rod, which comprises an inner panel, an outer panel and the said baffle; there is a cavity formed inside the inverted U-shaped fixing plate to accommodate the first turning rod; when the vehicle is folded, the first turning rod stretches into the said cavity and is fixed; when the vehicle is unfolded, the first turning rod leaves the said cavity.

14. The foldable carrying vehicle according to claim 13, wherein the said rotation fixing mechanism also comprises a bolt assembly; the bolt of the bolt assembly penetrates and fixes the inverted U-shaped fixing plate and the first turning rod.

15. The foldable carrying vehicle according to claim 14, wherein the said bolt assembly comprises a bolt, a reset spring and a pull ring; there are well-matched sockets in the inverted U-shaped fixing plate and the first turning rod; the said bolt is inserted in the inverted U-shaped fixing plate; the reset spring is set on the bolt inserted; the pull ring is arranged on the outer end of the bolt; when the pull ring is pulled outwards, the bolt draws back to form a space for the first turning rod to enter; after the first turning rod enters the space, releasing the pull ring will allow the bolt to penetrate and fix the first turning rod through the socket.

16. The foldable carrying vehicle according to claim 15, wherein the said sockets are arranged in the inner panel and outer panel of the inverted U-shaped fixing plate; and the bolt is inserted in the socket transversely.

17. The foldable carrying vehicle according to claim 16, wherein the said first turning rod includes an inner wall arranged with a socket and an outer wall arranged with a slot; when the first turning mechanism is unfolded, the bolt is pulled out of the sockets in the inner panel and inner wall, which will unlock the rotation fixing mechanism; the first turning rod and the second turning rod are turned until the bolt moves into the slot; the bolt is released and inserted again in the sockets in the inner panel and inner wall, which will lock the rotation fixing mechanism; when the first turning mechanism is folded, the bolt is pulled out of the sockets in the inner panel and inner wall, which will unlock the rotation fixing mechanism; the bolt moves out of the slot, and the first turning rod and the second turning rod are turned to fold at a certain angle.

18. The foldable carrying vehicle according to claim 13, wherein the said rotation fixing mechanism also comprises a screw assembly; on the inverted U-shaped fixing plate and the first turning rod, there are well-matched screw holes; when the vehicle is folded, the first turning rod stretches into the said cavity, and the screws pass through the screw holes to fix the first turning rod and the inverted U-shaped fixing plate.

19. The foldable carrying vehicle according to claim 18, wherein the said screw holes are arranged in the baffle, and the screws are inserted vertically in the screw holes by rotation.

20. The foldable carrying vehicle according to claim 10, wherein the said frame comprises a front axle and a rear axle; a third turning mechanism is provided between the said front support plate and front axle; when the vehicle is folded, the first turning rod is turned downward by means of the first turning mechanism to fold for the first time, and the front support plate is turned upward to fold for the second time.

21. The foldable carrying vehicle according to claim 10, wherein the said third turning mechanism comprises a swivel block on the front support plate that is coupled with the front axle via the swivel block.

22. The foldable carrying vehicle according to claim 13, wherein at the end of the said first turning rod, there is an extension part extending obliquely downward; a first coupling subpart and a second coupling subpart are respectively located at the lower end of the extension part and the inverted U-shaped fixing plate, and the two subparts together form the coupling part.
